Europäisches Patentamt

European Patent Office

Office européen des brevets

(11) Veröffentlichungsnummer : **0 227 663**
**B1**

(12) EUROPÄISCHE PATENTSCHRIFT

(45) Veröffentlichungstag der Patentschrift :
15.03.89

(51) Int. Cl.⁴ : **B 23 F 23/00**, B 23 Q   1/14

(21) Anmeldenummer : 85904102.2

(22) Anmeldetag : 03.08.85

(86) Internationale Anmeldenummer :
PCT/EP 85/00391

(87) Internationale Veröffentlichungsnummer :
WO/8601136 (27.02.86 Gazette 86/05)

(54) BEARBEITUNGSEINRICHTUNG ZUR VERZAHNUNG VON ZAHNRÄDERN.

(30) Priorität : 17.08.84 PCT/EP84/00253

(43) Veröffentlichungstag der Anmeldung :
08.07.87 Patentblatt 87/28

(45) Bekanntmachung des Hinweises auf die Patenterteilung : 15.03.89 Patentblatt 89/11

(84) Benannte Vertragsstaaten :
DE FR GB IT

(56) Entgegenhaltungen :
DE--B-- 1 079 424
DE--B-- 1 777 087
Machinery,Band 105, 2 December 1964, V. Negri:
"Cutting very large segmental gears in an Italian
shop", Seiten 1314-1318, Figur 6 auf Seite 1317
VDI-Zeitschrift, Vol. 125, September 1983, Düsseldorf
(DE) J. Rohmert: "Fachgebiete in Jahresübersichten:
Verzahnen", Seiten 679-690, Figur 1 auf Seite 679

(73) Patentinhaber : ZAHNRADFABRIK FRIEDRICHSHA-
FEN AKTIENGESELLSCHAFT
Löwentaler Strasse 100 Postfach 2520
D-7990 Friedrichshafen 1 (DE)

(72) Erfinder : PIEPKA, Erwin
Karl-Weiss-Strasse 2
D-7990 Friedrichshafen 5 (DE)
Erfinder : WÖLLHAF, Paul
Am Hang 28
D-7990 Friedrichshafen 5 (DE)
Erfinder : GANDBHIR, Subhash
Seegaddel 21
D-7759 Immenstaad (DE)

(74) Vertreter : Raue, Reimund
Zahnradfabrik Friedrichshafen AG Löwentaler
Strasse 100 Postfach 2520
D-7990 Friedrichshafen 1 (DE)

**Beschreibung**

Die Erfindung betrifft eine Bearbeitungseinrichtung nach dem Oberbegriff des Anspruches 1, wie sie aus der VDI-Zeitschrift, Band 125, September 1983, Seiten 679-690 insb. Bild 1 bekannt ist, und richtet sich insbesondere auf Anordnungen von Antriebs- bzw. Bearbeitungselementen für die Herstellung und Endbearbeitung von Verzahnungen, Nuten und anderen Bearbeitungsschritten gleicher Art, welche auf vorgegebenen Kurven liegen. Beispielsweise könnte ein an sich bekanntes, spanabtragendes Verfahren, wie ein Zahnflankenschleifverfahren, mit dieser Einrichtung durchgeführt werden. Die Probleme zur Bearbeitung großer Räder mit den konventionellen Verzahnungseinrichtungen sind z. B. bekannt aus Studte und Klopmeier, « Präzisions-Zahnflankenschleifmaschinen für Großräder », Werkstatt und Betrieb 114 (1981) 10, S 736/738, Bild 3. Dort ist auch festgestellt, daß Werkzeug und Werkstück auf Radien des Bearbeitungsdurchmessers zueinander relativ beweglich geführt bzw. zustellbar sind und der maximal mögliche Abstand des Werkzeuges vom Zentrum des Bearbeitungsdurchmessers bzw. des Radiuses der Bearbeitungskurve (Kreis), also auch dessen höchstzulässige Größe, bestimmt sind, weil Bearbeitungszentrum und Kurvenzentrum hier aufeinander gelegen sind.

Werkstücke, deren Bearbeitungsdurchmesser mit größerem als dem der Verzahnungsmaschine zubemessenen Maß gewählt wurde, ließen sich deshalb häufig nicht mehr auf betriebseigenen Maschinen verzahnen bzw. erforderten die Anschaffung von nur wenig ausgelasteten, entsprechend größeren und teureren Sondermaschinen mit hohem Investitions- und Platzbedarf, so daß die damit erzielbaren Stückkostenbelastungen unverhältnismäßig anwuchsen. Entsprechend große Sondermaschinen trugen dabei nicht einmal unbedingt zur Präzisionsverbesserung bei, weil die Werkzeug- bzw. Tisch-Hübe sehr groß wurden und damit die Toleranzfehler sich vergrößerten. Auch dadurch wurde eine günstigere Maschinenausnutzung mit Hilfe zwischenzeitlicher Bearbeitung kleinerer Werkstücke in Zeiten ohne Aufträge auf entsprechend große Werkstücke erschwert.

Die Aufgabe der Erfindung ist es, diesen Stand der Technik dahingehend zu verbessern, daß eine Einrichtung für gängige Werkstücke ausreichender Hauptabmessungen geschaffen wird, mit welcher aber bedarfsweise auch ebenfalls erheblich größere Werkstücke, als sie dem konventionell ermittelten (also von radialer Zustellung ausgehendem) größtzulässigen Bearbeitungsdurchmesser jener konventionell ausgerüsteten Maschinen an sich entsprechen, mit nur unwesentlichen Zeitverlusten für die Zustellbewegungskorrekturen zwischen den Teilschnitten präzise bearbeitbar sind.

Die Lösung wird mit den im Kennzeichen des Anspruches 1 angegebenen Merkmalen insbesondere dadurch erreicht, daß auf einer normal großen Einrichtung ein Werkstück und ein Werkzeug mit Hilfe von exzentrischen Zuordnungen von Werkstück und Werkzeug sowie Achsversatz der Zustellbewegung ermöglichenden Antriebs- und Schwenkelementen unter entsprechender Steuerung bzw. Programmierung auch dann koaxial zur jeweiligen Nut bzw. Zahnlücke über die zugehörige Teilkurve relativ beweglich geführt bzw. gegeneinander zugestellt werden können, wenn das Werkstück in Form eines nur durch den Querhub des Werkzeugschlittens längenbegrenzten Segmentes oder Kurventeilstückes aber mit beliebig großem Bearbeitungsdurchmesser gekennzeichnet ist. Damit wird es möglich, mit entsprechend ausgestatteten Antriebselementen und der Zusatzsteuerung konventionell große Bearbeitungs- bzw. Verzahnungsmaschinen üblicher Größe sowohl für konzentrisch gehaltene Werkstücke mit gängigen, als auch für exzentrisch gehaltene Werkstücke mit erheblich größeren Bearbeitungsdurchmessern, also dem Radialabstand vom Werkzeug zum Bearbeitungsdurchmesser-Zentrum entsprechen, praktisch ebenso präzise zu bearbeiten wie bei üblichen Maschinengrößen. Insbesondere Zahnsegmente und Innenverzahnungen mit extremen Bearbeitungsdurchmessern lassen sich damit nun auf Maschinen für erheblich kleinere Normalräder verzahnen. Da die Zustellungen für die Achsversatz-Veränderungen und Schwenkwinkelkorrekturen und gegebenenfalls auch für Schwenkwinkelkorrekturen von Bearbeitungsschritt zu Bearbeitungsschritt gleichzeitig laufen können, entstehen dabei gegenüber allein radialer Zustellung auch nur unwesentliche Zeitverluste beim Umsetzen des Bearbeitungsvorganges von einer Zahnlücke auf die nächste.

Damit ist eine Möglichkeit gegeben, gegenüber wechselnden Kurvenzentren radiale Bearbeitungshübe an jede Arbeitsposition vornehmen zu lassen, wie es z. B. beim Einarbeiten von Nuten bzw. Verzahnungen in Segmente nötig ist.

Während also bisher der maximale Bearbeitungsdurchmesser eines Werkstückes insbesondere dadurch bestimmt war, welcher Platz im Arbeitsraum der Maschine bei konzentrischer Aufspannung von Werkstück und Aufnahme (z. B. auf einem Teilkopf) noch vorhanden war, ist es nunmehr möglich, bei gleicher Maschinenausstattung und einfachster Umstellung auch Radsegmente oder Kurven zu bearbeiten bzw. zu verzahnen, deren Radien weit größer sind bzw. deren Kurvenzentrum nicht mehr mit dem Aufnahmezentrum zusammenfallen. Gleichzeitig können mit der erfindungsgemäßen Ausrüstung auch die Bedingungen erfüllt sein, um koparallel zu den jeweils von näher oder weiter abgelegenen Kurvenzentren ausgehenden Radien auf den wechselnden Arbeitspositionen für die einzelnen Bearbeitungsschritte auch exakt wiederholgenaue Bearbeitungshübe vom einen oder von mehreren Antriebselementen vornehmen zu lassen.

Vorteilhafte Weiterbildungen der Erfindung sind durch die Unteransprüche angegeben.

- Gemäß Anspruch 2 ist die Aufnahme gleichzeitig als Teilkopf, z. B. für rationell übliche Verzahnungsarbeiten an Rädern, vorgesehen.

- Gemäß Anspruch 3 ist eine Möglichkeit zur Erweiterung der bearbeitbaren Gesamtlänge länglicher Werkstücke und zur Beschleunigung der Abläufe vorgesehen.

- Gemäß Anspruch 4 ist eine Möglichkeit zur Erweiterung der bearbeitbaren Gesamthübe, z. B. für große Zahnbreiten sowie zur Beschleunigung, vorgesehen.

- Gemäß Anspruch 5 und 6 bietet sich die Möglichkeit für Schleif- bzw. Fräsmaschinen-Einsätze.

- Gemäß Anspruch 7 wird ein wesentlich beschleunigter Ablauf erreicht und eventuelle Totzeiten verkürzt.

- Gemäß Anspruch 8 wird eine einfache Umstellmöglichkeit auf unterschiedliche Werkstücke erreicht.

Die erfindungsgemäße Einrichtung eignet sich nicht nur für konventionelle Bearbeitungsverfahren, sondern auch z. B. zur Ansteuerung von Schweißpunkten, Niet- oder Schraubstellen unter Verwendung der üblicherweise für andere Bearbeitungen geeigneten Maschinen.

Dabei ist es auch möglich, statt einer Manövrierbarkeit des Werkzeuges eine für die Aufnahme des Werkstückes vorzusehen oder beide relativ zueinander zu verfahren.

Ein Ausführungsbeispiel der Erfindung wird schematisch anhand der Zeichnungen beschrieben :

Fig. 1 zeigt in Vorderansicht ein Einrichtungsprinzip, wie es gemäß dem Stand der Technik zur Bearbeitung von konzentrisch zur Werkstückaufnahme gespannten Werkstücken für bestimmte Bearbeitungsdurchmesser in Frage kommt.

Fig. 2 zeigt in gleicher Vorderansicht die gleiche Einrichtung bei der Bearbeitung von exzentrisch zur Werkstückaufnahme gespannten Werkstücken an sich beliebiger Bearbeitungsdurchmesser.

Fig. 3 zeigt eine Draufsicht auf die Einrichtungen Fig. 1 und 2.

Fig. 4 zeigt in vergrößertem Maßstab das Prinzip eines Zustellvorganges von einem Bearbeitungsschritt zu einem anderen.

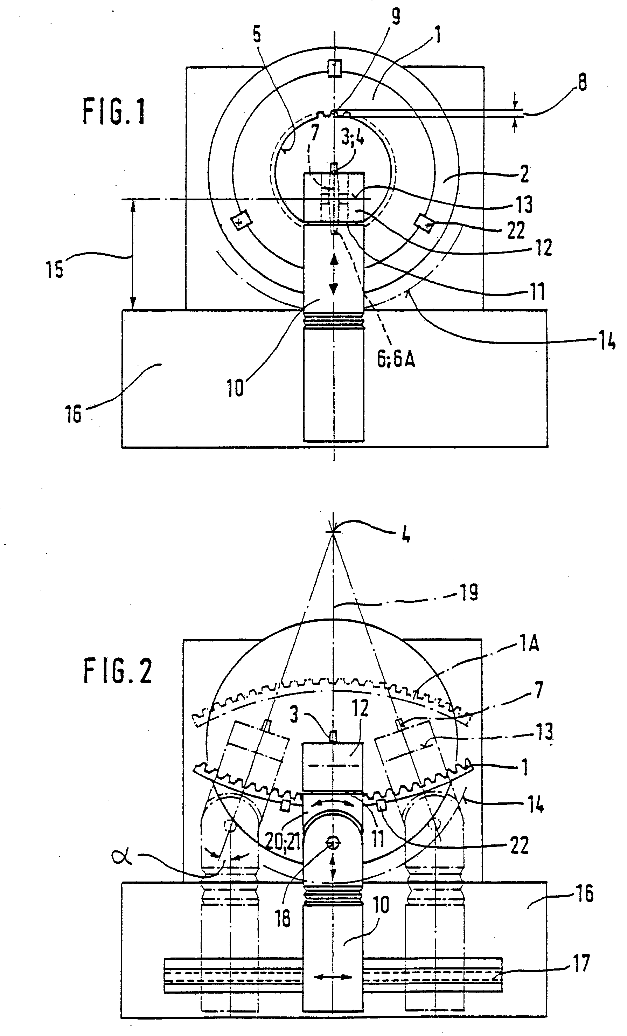

In Fig. 1 ist die Bearbeitungseinrichtung, wie auch beim Stand der Technik, zum Bearbeiten eines Werkstückes 1 eingesetzt, das an einer Aufnahme 2 in gemeinsamem Mittelpunkt zusammentreffenden Koordinaten des Werkstückzentrums 3 und des Aufnahmezentrums 4 gehalten ist. Auf einer vorgegebenen Kurve 5 liegt die Arbeitsposition 6 des Werkzeuges 7. Hier ist die Kurve 5 ein Kreisbogen, dessen rund um den Mittelpunkt 3 gelegene Anschnitte Nuten sind, die durch einen Bearbeitungshub 8 herzustellen wären. Aus der jeweiligen Arbeitsposition 6 heraus kann das Werkzeug 7 einen zu Punkt 3 bzw. 4 radialen Bearbeitungshub in die jeweils angesteuerte Nut 9 hinein vornehmen. Für diese Aufgabe ist es lediglich nötig, das hier Fräser oder Schleifer tragende Werkzeug 7 mit einem Vertikalantriebselement 10 und einem gegenüber diesem in der Führung 11 querverschieblichen Horizontal-Antriebselement 12 für Bearbeitungshübe auszustatten.

Letzteres hat daher hier noch einen Drehantrieb 13 für das Werkzeug 7 zu tragen. Da der Übergang von einem Bearbeitungsschritt zum nächsten bzw. von einer Arbeitsposition 6 zur Arbeitsposition 6a dank der konzentrischen Anordnung von Werkstück 1 zur Aufnahme 2 (Teilkopf) allein durch entsprechende Winkelverdrehung des letzteren um die durch sein Zentrum 3/4 verlaufende Drehachse erreichbar ist, braucht diese Anordnung keine weiteren Quer- oder Schwenkhübe, ermöglicht aber dafür auch nur einen größten Bearbeitungsdurchmesser 14 für das Werkstück 1. Dieser ist hier durch die Freihöhe 15 des Werkzeuges 7 über dem Maschinenbett 16 begrenzt.

Für Sonderausführungen, z. B. zur Nutverbreiterung oder Nutvertiefung, ist es zudem möglich, sowohl die Aufnahme 2 (Teilkopf) als auch das Werkzeug 7 noch separat quer- oder höhenverschieblich auszuführen, wobei sich dadurch jedoch kein größerer Bearbeitungsdurchmesser mehr erzielen läßt.

In Fig. 2 ist das Maschinenbett 16 für einen oder mehrere Vertikal-Antriebselemente 10 eingerichtet, welche selbst nochmals entlang einem Querantriebselement 17 seitlich zum Aufnahmezentrum 3 auf ganzer Breite des Maschinenbettes 16 verfahrbar sind. Außerdem verfügt in dem gezeigten Beispiel das Vertikal-Antriebselement 10 an seinem werkzeugseitigen Ende für eine Schrägstellung des von ihr in der Führung 11 gehaltenen Horizontal-Antriebselementes 12 noch über ein Schwenkantriebselement 18. Dieses könnte zwar auch oberhalb der Führung 11 im Horizontal-Antriebselement 12 angeordnet sein, wird jedoch aus Schwerpunktgründen günstiger im Bereich des Maschinenbettes 16 vorgesehen. Schließlich ist noch die Aufnahme 2 (Teilkopf) für eine zum Aufnahmezentrum 3 exzentrische Anordnung großer Werkstücke 1 eingerichtet, so daß das Werkstückzentrum 4 bzw. der Mittelpunkt der jeweiligen Kurve 5 weit abseits des Aufnahmezentrums 3 oder auch seitlich versetzt zur Verbindungsachse 19 der beiden Zentren 3 und 4 zu liegen kommen kann.

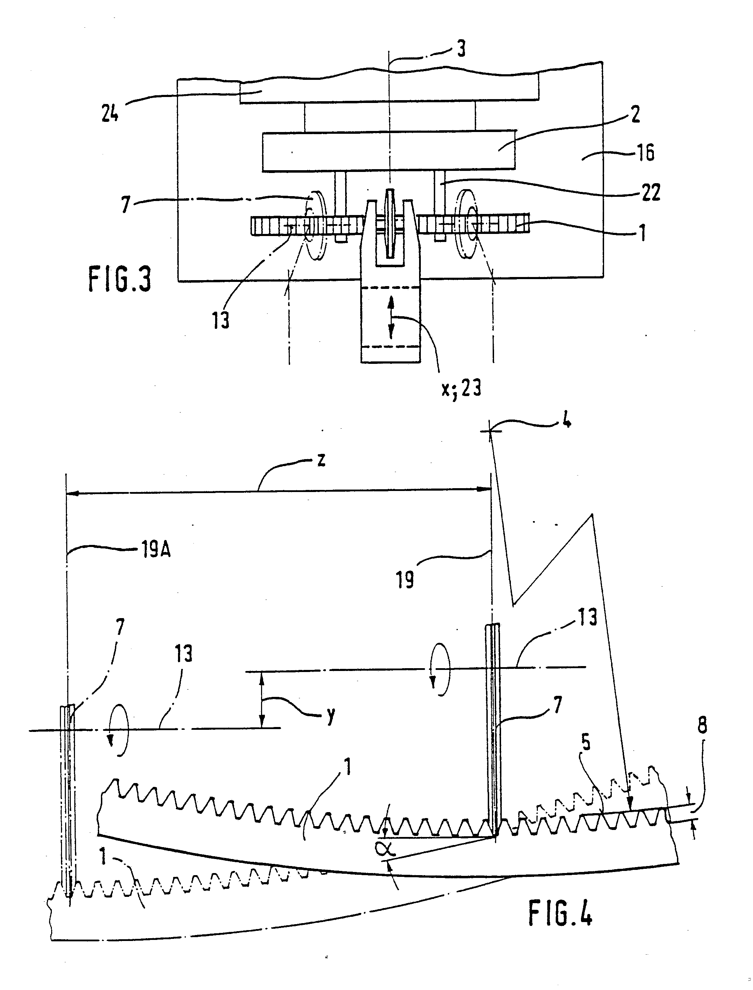

Die Arbeitspositionen 6 können damit nun jedenfalls außerhalb konzentrischer Kreise um das Aufnahmezentrum 3 liegen und sind jeweils neu definiert, z. B. durch je eine Koordinate y und z bezogen auf das Aufnahmezentrum 3 (siehe Fig. 4). Dabei wäre y ein Vertikalabstand des Angriffspunktes des Werkzeuges 1 und z ein Horizontalabstand vom Aufnahmezentrum 3, welche vom nicht gezeigten Rechner von Bearbeitungsschritt zu Bearbeitungsschritt neu zu ermitteln und von der Maschine neu anzusteuern wären. Dies muß dann gemäß Fig. 2 mit mindestens einem Vertikal-Antriebselement 10 und einem Quer-Antriebselement 17 unter eventueller Mitberücksichtigung des Schwenkantriebselementes 18 erfolgen, sobald die betreffende Arbeitsposition 6 seitab von der Verbindungsachse 19 der beiden Zentren 3, 4 zu liegen kommt, also z ungleich 0 wird.

Diese Bearbeitungseinrichtung würde auch die Durchführung von Bearbeitungsschritten an Segmenten bzw. Stangen auf sehr gestreckten Kurven bzw. erforderlichenfalls sogar auf geraden Stangen ermöglichen. Gleichfalls ist eine Umkehrung der Kurve, z. B. für Außenverzahnungen gemäß der Darstellung von Position 1 A (Fig. 2) möglich.

Für das Beispiel sind Bearbeitungsschritte angenommen, welche h?upchlich in Richtung der Bildebene erfolgen, entlang der Verschieberichtung des Horizontal-Antriebselementes 12, die hier als x-Achse anzusehen wäre. Ein dazu senkrechter Bearbeitungshub 8 entlang der y-Achse kann entweder z. B. zur Vereinfachung der Rechenschritte des Programmes mittels eines im schwenkbaren Oberteil 20 des Schwenkantriebselementes 18 eingelassenen, hier nicht gesondert dargestellten weiteren Hubantriebselementes 21 oder auch bereits allein mittels entsprechend synchronisierter Bewegungen der beiden Elemente 10, 18 erreicht werden.

In Fig. 3 ist das in Draufsicht dargestellte Werkstück 1 mittels Abstandhaltern 22 vor der Aufnahme 2 (bzw. dem Teilkopf) so angeordnet, daß das Werkzeug 7 seinen Bearbeitungsschritt 23 unbehindert durch die Fl¿cAufnahme 2 vornehmen kann. Diese ist, bei Ausgestaltung als Teilkopf über einen Drehantrieb 24 selbstständig nochmals um ihr eigenes Zentrum 3 drehbar. Das Werkzeug 7 ist mit seinen Antriebselementen 10, 12, 18 in dieser Figur sowohl in der Normalstellung (z. B. für die Räderverzahnung) auf dem Werkstückzentrum 4 als auch (gestrichelt) in den äußeren Randlagen in den Abständen z vom Aufnahmezentrum 4 rein schematisch dargestellt. Die Antriebe und Führungen sowie die Klemmungen und Stellungsgeber etc. können auf an sich beliebige Weise hergestellt bzw. ausgeführt werden.

In Fig. 4 ist ein Beispiel einer Verzahnungsanfertigung auf großem Kurvenradius (Verbindungsachse 19) mit der beschriebenen Bearbeitungseinrichtung so dargestellt, als bliebe das Werkzeug 7 ungeschwenkt und nur das Werkstück 1 würde jeweils dem anderen Schnittwinkel, wie bei der bekannten Bearbeitungseinrichtung auch möglich, angepaßt. Eine solche Lageänderung ließe sich z. B. erreichen, wenn das Werkstück 1 von der Aufnahme 2 in deren Zentrum 3 gedreht würde.

Bezugszeichen

1, 1 A  Werkstück
2  Aufnahme (Teilkopf)
3  Aufnahmezentrum
4  Werkstückzentrum
5  Kurve für Bearbeitungsschritte
6, 6 A  Arbeitsposition auf Kurve 5
7  Werkzeug

8  Bearbeitungshub
9  Nut
10  Vertikal-Antriebselement
11  Führung
12  Horizontal-Antriebselement
13  Drehantriebsachse für Werkzeug 7
14  größter Bearbeitungsdurchmesser
15  Freihöhe
16  Maschinenbett
17  Querantriebselement
18  Schwenkantriebselement
19, 19 A  Verbindungsachse von 3 und 4 (Radius)
20  schwenkbares Oberteil von 18
21  Hubantriebselement
22  Abstandhalter
23  Bearbeitungsschritt
24  Drehantrieb von 2 (des Teilkopfs)
25

x-Achse  Horizontalhub
y-Achse  Vertikalhub
z-Achse  Querhub
Schwenkhubwinkel

**Patentansprüche**

1. Bearbeitungseinrichtung
- mit einer drehend indexierbaren Werkstück-Aufnahme (2) und einem relativ dazu in drei Dimensionen linear versetzbaren Werkzeug (7),
- zur materialabtragenden Bearbeitung von Werkstücken (1) entlang einem vorgegebenen, um eine Mittelachse angeordneten Profil, wie bei der Verzahnung von Zahnrädern,
- indem zur Erstellung gleichförmiger Teilprofile bei jeweils einer Indexstellung des Werkstückes nacheinander Bearbeitungsschritte in Form von Bearbeitungshüben (23) mittels eines durch numerisch steuerbare Antriebs-Elemente (10, 17) bewegten Werkzeuges (7) erfolgen, dadurch gekennzeichnet,
- daß neben den linearen Antriebselementen (10, 12, 17) für das Werkzeug (7) noch ein Schwenkantriebselement (18) vorgesehen ist, mit welchem eine radiale Ausrichtung des Werkzeuges (7) relativ zur Werkstück-Achse (4) auch dann einstellbar ist, wenn das Werkzeug (7) an ein um einen Mittenabstand (X, Y oder Z) exzentrisch angeordnetes Werkstück zugestellt werden muß, d. h., wenn die Werkstück-Mittelachse (4) des vorgegebenen Profils und die Indizierachse (3) der Werkstückaufnahme (2) nicht übereinstimmen,
- wobei die radiale Ausrichtung durch die numerische Steuerung in Abhängigkeit von der exzentrischen Werkstückanordnung im Zusammenhang mit entsprechenden Zustellbewegungen vorgebbar ist.

2. Bearbeitungseinrichtung nach Anspruch 1, dadurch gekennzeichnet, daß die Aufnahme (2) als Teilkopf einer Verzahnungsmaschine ausgebildet ist, welcher über einen eigenen Drehantrieb (24) für eine Drehung um das Aufnahmezentrum (3) verfügt.

3. Bearbeitungseinrichtung nach einem der vorstehenden Ansprüche, dadurch gekennzeichnet, daß die Aufnahme (2) bzw. deren Drehantrieb (24) gegenüber dem Schwenkantriebselement (18) für das Werkzeug (7) querverschieblich ist.

4. Bearbeitungseinrichtung nach einem der vorstehenden Ansprüche, dadurch gekennzeichnet, daß die Aufnahme (2) bzw. deren Drehantrieb (24) gegenüber dem Schwenkantriebselement (18) koaxial verschieblich ist.

5. Bearbeitungseinrichtung nach einem der Ansprüche 2, 3 oder 4, dadurch gekennzeichnet, daß das Werkzeug (7) selbst einen Drehantrieb (13) aufweist, welcher gegenüber dem Drehantrieb (24) der Aufnahme (2) quer- bzw. vertikalverschieblich ist.

6. Bearbeitungseinrichtung nach einem der Ansprüche 2, 3 oder 4, dadurch gekennzeichnet, daß das Werkzeug (7) selbst einen Drehantrieb (13) aufweist, welches gegenüber dem Drehantrieb (24) der Aufnahme (2) querverschieblich ist.

7. Bearbeitungseinrichtung nach einem der Ansprüche 2, 3, 4 oder 5, dadurch gekennzeichnet, daß der Drehantrieb (13) des Werkzeugs (7) gegenüber der Achse des Drehantriebes (24) der Aufnahme (2) höhenverschieblich ist.

8. Bearbeitungseinrichtung nach einem der vorstehenden Ansprüche, dadurch gekennzeichnet, daß der Drehantrieb (13) des Werkzeugs (7) gegenüber der Aufnahme (2) zugleich auf allen Achsen (8, 10, 12, 13, 17, 18) beweglich ist und diese Achsen einzeln klemmbar sind.

**Claims**

1. A machining arrangement
- having a rotatingly indexable workholding arrangement (2) and a tool (7) moveable relative thereto linearly in three dimensions
- for the machining of workpieces along a predetermined profile located about a central axis, as in gear cutting,
- in which machining phases in the form of successive machining strokes (23) are performed at each indexing position of the workpiece by means of a tool (7) moved by numerically controllable drive elements (10, 17), to produce identical part profiles, characterized in that
- in addition to the linear drive elements (10, 12, 17), a swivel drive element (18) for the tool (7) is provided, by means of which the position of the tool (7) can be radially aligned relative to the workpiece axis (4) even when the tool (7) must be advanced to a workpiece which is positioned excentrically offset by a centre distance (X, Y or Z), i. e. when the central axis (4) of the predetermined profile does not coincide with the indexing axis (3) of the workholder (2),
- and said radial alignment of the tool can be predetermined by the numerical control system depending on the excentric location of the workpiece, in conjunction with corresponding advance movements.

2. A machining arrangement according to Claim 1, characterized in that the workholder (2)

is formed as a dividing head of a gear cutting machine, and has its own rotary drive (24) to rotate the workholder (2) about its centre.

3. A machining arrangement according to one of the above claims, characterized in that the workholder (2) or the rotary drive (24) thereof is laterally moveable relative to the swivel drive element (18) for the tool (7).

4. A machining arrangement according to one of the above claims, characterized in that the workholder (2) or the rotary drive (24) thereof is moveable coaxially with the swivel drive element (18).

5. A machining arrangement according to one of Claims 2, 3 or 4, characterized in that the tool (7) itself is provided with a rotary drive (13) which is laterally and/or vertically moveable relative to the rotary drive (24) of the workholder (2).

6. A machining arrangement according to one of Claims 2, 3 or 4, characterized in that the tool (7) itself is provided with a rotary drive element (13) which is laterally moveable relative to the rotary drive (24) of the workholder (2).

7. A machining arrangement according to one of Claims 2, 3, 4 or 5, characterized in that the rotary drive (13) for the tool (7) is vertically moveable relative to the axis of the rotary drive (24) of the workholder (2).

8. A machining arrangement according to one of the above claims, characterized in that the rotary drive (13) for the tool (7) is simultaneously movable relative to the workholder (2) along all axes (8, 10, 12, 13, 17, 18) and that said axes are individually clampable.

**Revendications**

1. Dispositif d'usinage
- avec une réception de pièce brute (2) rotative indexable et un outil (7) déplaçable sur le plan linéaire en trois dimensions, s'y rapportant,
- pour l'usinage de pièces brutes (1) par enlèvement de matériau le long d'un profil donné, disposé autour d'un axe central, comme dans le cas de dentures d'engrenages,
- des phases d'usinage sous la forme de séquences (23) successives se produisant pour la fabrication de profils de pièces identiques avec respectivement une cadence unitaire de la pièce brute, au moyen d'un outil (7) se déplaçant sous l'effet d'éléments d'entraînement (10, 17) à commande numérique, caractérisé en ce que,
- en plus des éléments d'entraînement linéaires (10, 12, 17) pour l'outil (7), un élément d'entraînement de rotation (18) est prévu, grâce auquel un alignement radial de l'outil (7) par rapport à l'axe de la pièce brute (4) peut également être réglé si l'outil (7) doit être dirigé vers une pièce brute disposée en sorte que l'entr'axe (X, Y ou Z) est excentrique, c.-à-d. si l'axe central de la pièce brute (4) du profil donné ne correspond pas à l'axe indexé (3) de la réception de la pièce brute (2).
- l'alignement radial venant de la commande numérique pouvant être pré-réglé en fonction de la disposition excentrique de la pièce brute en relation avec les mouvements d'approche correspondants.

2. Dispositif d'usinage selon revendication 1, caractérisé en ce que la réception (2) a la forme d'un mécanisme diviseur pour machine de taillage des dentures disposant d'un réducteur de rotation (24) propre autour du centre de réception (3).

3. Dispositif d'usinage selon une des précédentes revendications, caractérisé en ce que la réception (2) ou son réducteur de rotation (24) peut être déplacée transversalement par rapport à l'élément d'entraînement de rotation (18) de l'outil (7).

4. Dispositif d'usinage selon une des précédentes revendications, caractérisé en ce que la réception (2) ou son réducteur de rotation (24) peut être déplacée en sens coaxial par rapport à l'élément d'entraînememt de rotation (18).

5. Dispositif d'usinage selon revendication 2, 3 ou 4, caractérisé en ce que l'outil (7) présente un réducteur de rotation (13) propre pouvant être déplacé en sens transversal ou vertical par rapport au réducteur de rotation (24) de la réception (2).

6. Dispositif d'usinage selon revendication 2, 3, 4 ou 5, caractérisé en ce que l'outil (7) présente un réducteur de rotation (13) propre pouvant être déplacé en sens transversal par rapport au réducteur de rotation (24) de la réception (2).

7. Dispositif d'usinage selon une des revendications 2, 3, 4 ou 5, caractérisé en ce que le réducteur de rotation (13) de l'outil (7) peut être déplacé dans le sens de la hauteur par rapport au réducteur de rotation (24) de la réception (2).

8. Dispositif d'usinage selon une des revendications précédentes, caractérisé en ce que le réducteur de rotation (13) de l'outil (7) est amovible sur tous les axes à la fois (8, 10, 12, 13, 17, 18) par rapport à la réception (2), et en ce que ces axes peuvent être bloqués individuellement.

**FIG.1**

**FIG.2**

FIG.3

FIG.4